Europäisches Patentamt

European Patent Office

Office européen des brevets

(19)

(11) Numéro de publication : **0 486 364 B1**

(12) **FASCICULE DE BREVET EUROPEEN**

(45) Date de publication du fascicule du brevet :
**19.10.94 Bulletin 94/42**

(51) Int. Cl.$^5$ : **G01S 13/74,** G01S 13/80,
G06K 7/10, G06K 19/06

(21) Numéro de dépôt : **91402988.9**

(22) Date de dépôt : **07.11.91**

(54) **Système d'échanges de données par ondes électromagnétiques.**

(30) Priorité : **16.11.90 FR 9014289**

(43) Date de publication de la demande :
**20.05.92 Bulletin 92/21**

(45) Mention de la délivrance du brevet :
**19.10.94 Bulletin 94/42**

(84) Etats contractants désignés :
**AT BE CH DE ES GB GR IT LI LU NL SE**

(56) Documents cités :
**EP-A- 0 199 162**
**EP-A- 0 343 034**
**FR-A- 2 387 458**
**FR-A- 2 636 187**
**GB-A- 2 203 313**
**US-A- 4 173 016**
**TOSHIBA REVIEW, no.155, printemps 1986,**
**Tokyo, JP; OHYAMA et al: "Toshiba program-**
**mable identification system, TOSPID", pages**
**19-23.**
**CRYOGENICS, vol.28, no.1, janvier 1988, Guil-**
**dford, Surrey, GB; CHO etal: "Cryogenic UHF**
**FET oscillator for magnetic resonance detec-**
**tion" pages 32-35.**

(73) Titulaire : **THOMSON-CSF**
**SEMICONDUCTEURS SPECIFIQUES**
**173, Boulevard Haussmann**
**F-75008 Paris (FR)**

(72) Inventeur : **Camiade, Marc**
**THOMSON-CSF,**
**SCPI,**
**B.P 329**
**F-92402 COURBEVOIE CEDEX (FR)**
Inventeur : **Serru, Véronique**
**THOMSON-CSF,**
**SCPI,**
**B.P 329**
**F-92402 Courbevoie Cédex (FR)**
Inventeur : **Geffroy, Dominique**
**THOMSON-CSF,**
**SCPI,**
**B.P 329**
**F-92402 Courbevoie Cédex (FR)**

(74) Mandataire : **Taboureau, James et al**
**THOMSON-CSF,**
**SCPI,**
**B.P. 329,**
**50, rue Jean-Pierre Timbaud**
**F-92402 Courbevoie Cédex (FR)**

EP 0 486 364 B1

EP 0 486 364 B1

## Description

La présente invention concerne un système de transmission de données par modulation - démodulation d'une onde électromagnétique, pour communication bidirectionnelle entre une station fixe, dite balise ou lecteur, et une station mobile, dite badge ou répondeur. Plus précisément, l'invention concerne le modem (modulateur-démodulateur) du badge portable, qui comprend un oscillateur, ce qui permet au badge d'être actif en émission et actif en réception. C'est à dire que plusieurs badges d'un réseau maillé organisé autour d'une station fixe peuvent échanger des données.

Ce type d'échange de données trouve ses applications dans le contrôle de mobiles, tel qu'identification de wagons sur une voie, d'automobiles à un péage ou de piétons à une entrée d'immeuble. La station mobile ou badge se présente comme une carte à puce, et elle doit être extrêmement économe en énergie, car elle est alimentée par de petites piles dites "boutons".

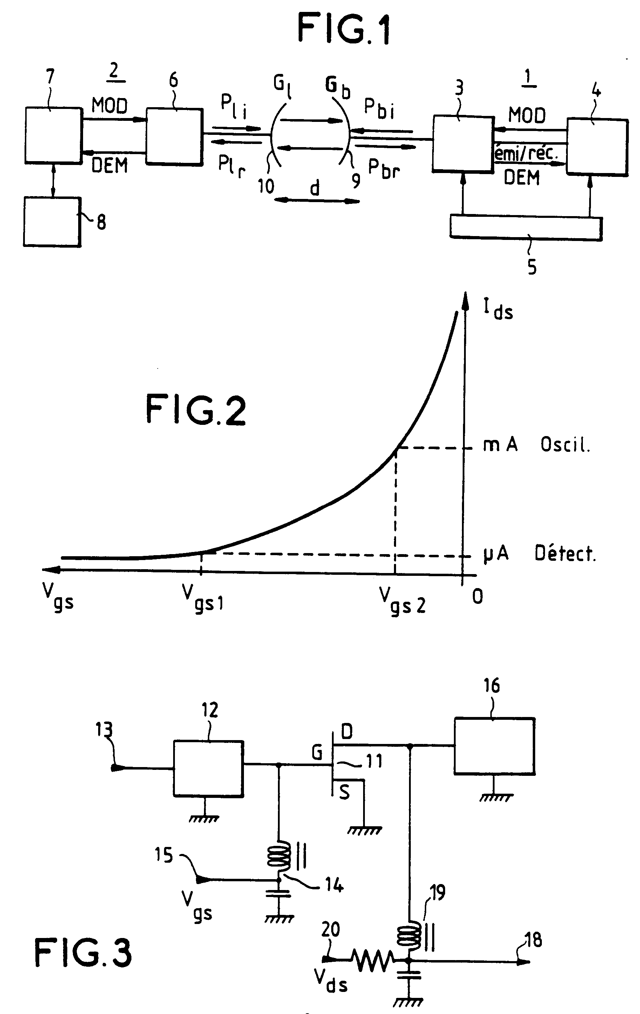

Le schéma d'ensemble d'un système d'échange de données par rayonnement électromagnétique, en hyperfréquences, selon l'art connu, est assez simple, et la figure 1 qui le représente permet d'en préciser les éléments, et les sigles utilisés.

Une station mobile ou badge 1 comprend une partie hyperfréquence 3, une partie traitement de l'information 4 et une alimentation 5. Les échanges entre ces deux parties concernent la modulation - démodulation et les commandes émission/réception.

La station fixe ou balise 2 comprend une source hyperfréquence, une partie hyperfréquence 6, une partie de traitement de l'information 7, et un calculateur 8 qui permet de gérer l'ensemble des échanges radioélectriques effectués avec les badges, par l'intermédiaire des antennes 9 pour chaque badge et 10 pour la balise ou lecteur.

On utilisera :
- d = distance entre les antennes 9 et 10,
- $G_l$ = gain de l'antenne 10 du lecteur 2
- $G_b$ = gain de l'antenne 9 du badge 1
- $P_{ll}$ = puissance émise à l'antenne du lecteur 2
- $P_{lr}$ = puissance reçue par l'antenne du lecteur
- $P_{bl}$ = puissance émise à l'antenne du badge 1
- $P_{br}$ = puissance reçue par l'antenne du badge

Les modulations utilisées dans ces systèmes sont généralement de type OOK (en modulation d'amplitude on-off-keying) ou de type PSK (en modulation de phase O/¶ phase-shift keying)

Le fonctionnement du modem n'est pas le même selon que la balise interroge le badge, ou que le badge répond à la balise.

Dans le sens de l'interrogation du badge 1 par le lecteur 2, celui-ci génère ($P_{ll}$) un signal hyperfréquence modulé. Le badge reçoit ce signal ($P_{br}$) et le démodule : c'est une étape qui permet d'activer le badge qui était à l'état de veille.

Dans le sens de la réponse du badge 1 au lecteur 2, le lecteur génère alors un signal hyperfréquence non modulé. Le badge reçoit ce signal, le module c'est à dire le charge des informations au sujet desquelles il a été interrogé - et réémet un signal comportant, suivant le cas, soit des pertes, soit du gain.

En effet, le badge peut être :
- passif, en émission, c'est à dire que la puissance qu'il émet est toujours inférieure à la puissance qu'il reçoit ($P_{bl} < P_{br}$), et l'énergie lui est fournie par le lecteur, comme par exemple dans le document EP-A-0 343 034.
- ou actif, en émission, c'est à dire qu'il comprend un amplificateur hyperfréquence ($P_{bl} > P_{br}$), ce qui suppose donc une source d'alimentation telle que des piles.

Il y a donc des problèmes de consommation d'énergie tout au moins du côté du badge, qui équivalent à des problèmes d'obtention de sensibilité du badge à l'état de veille, donc sous très faible consommation, et de sensibilité du lecteur compte tenu du faible niveau d'émission du badge, et des parasites apportés par d'autres systèmes fonctionnant à une fréquence proche.

Mais en outre un badge, même s'il comprend un amplificateur, ne peut communiquer qu'avec un lecteur : il n'y a pas de communication possible entre badges.

L'invention consiste notamment à introduire un oscillateur hyperfréquence dans le modem du badge, ce qui change les conditions de fonctionnement du système d'échange de données, et ce qui permet en outre aux badges de converser entre eux, puisqu'un badge muni d'un oscillateur peut devenir un lecteur pour un autre badge.

L'invention concerne un système d'échange de données par ondes électromagnétiques entre des stations, qui comprend une station fixe, dite lecteur, et au moins une station mobile, dite badge, chacune de ces deux stations comportant un dispositif modulateur/démodulateur, le système étant conforme à la revendication 1.

L'invention sera mieux comprise par la description plus détaillée qui en suit maintenant, en conjonction avec les figures jointes en annexe, qui représentent :

- figure 1 : schéma synoptique d'ensemble d'échanges de données, par liaisons hyperfréquences. Cette figure, exposée dans le préambule au sujet de l'art connu, reste valable pour l'invention,
- figure 2 : courbe $I_{ds} = f(V_{gs})$ du transistor utilisé dans le badge selon l'invention
- figure 3 : schéma électrique synoptique du badge selon l'invention
- figure 4 : schéma de réalisation en microbandes du circuit de la figure 3
- figure 5 : schéma de réalisation en circuit intégré du circuit de la figure 3
- figure 6 : schéma fonctionnel du lecteur, ou balise d'interrogation, selon l'invention.

De façon générale, la condition nécessaire pour que la transmission du lecteur vers le badge soit opérationnelle est que la puissance reçue par le badge $P_{br}$ soit supérieure à la puissance minimale $P_{br\ min}$ de déclenchement du circuit de démodulation du badge :

$$P_{br} = P_{li}.G_l.G_b.(\frac{\lambda}{4\P d})^2 > P_{br\ min}$$

avec $\lambda$ = longueur d'onde.

De la même façon, la condition nécessaire pour que la transmission du badge vers le lecteur soit opérationnelle est que la puissance reçue par le lecteur $P_{lr}$ soit supérieure à la puissance minimale $P_{lr\ min}$ de déclenchement du circuit de démodulation du lecteur :

$$P_{lr} = P_{li}.G^2_l.G^2_b(\frac{\lambda}{4\P d})^4.G_{mod} > P_{lr\ min}$$

avec $G_{mod}$ = perte ou gain apporté par le badge au cours de la modulation, dans un cas classique.

La sensibilité du démodulateur du lecteur est beaucoup plus grande que celle du démodulateur de badge, mais les problèmes de consommation ne sont les mêmes, puisque le lecteur est une station fixe qui peut facilement être alimentée.

A titre d'exemple, pour un dispositif selon l'art connu qui répond aux caractéristiques suivantes :

- $G_l$ = 15 dB
- $P_{li}.G_l$ = 27 dBm (puissance maximale autorisée par la législation en France)
- $G_b$ = 6 dB
- $G_{mod}$ = - 3dB pour un badge passif en émission
  = + 6dB pour un badge actif en émission
- d = 10 mètres

les sensibilités minimales sont, en dBm :

| fréquence | | 2,45 GHz | 9,9 GHz |
|---|---|---|---|
| Pour le badge | | - 27 | - 39 |
| Pour le lecteur | badge passif | - 69 | - 93 |
| | badge actif | - 60 | - 84 |

Le circuit proposé par l'invention permet d'obtenir une plus grande sensibilité du badge et du lecteur, avec, en ce qui concerne le badge, une très faible consommation (quelques microampères).

Selon l'invention, le modem hyperfréquence du badge comporte un oscillateur hyperfréquence, dans la gamme de 1 à 100 GHz, ce qui fait que le badge peut émettre des informations, indépendamment du lecteur.

Dans les échanges d'information entre le lecteur et le badge, la présence d'un oscillateur dans le badge ne change rien dans la phase d'interrogation : le lecteur génère un signal hyperfréquence modulé en amplitude, et le badge démodule ce signal ; au moins un transistor fonctionne en démodulateur.

Dans la phase de réponse, du badge vers le lecteur, le lecteur n'émet plus aucun signal mais est en position de démodulation. C'est le badge qui émet, grâce à son oscillateur, un signal modulé. Le type de modulation le plus simple à utiliser est la modulation d'amplitude : au moins un transistor fonctionne en oscillateur. Mais la modulation de phase peut également être utilisée.

La fonction hyperfréquence du modem peut être réalisée au moyen d'un seul transistor, de préférence un transistor à effet de champ, qui fonctionne soit en démodulateur soit en oscillateur, selon son point de polarisation.

La figure 2 représente la caractéristique statique I-V pour un transistor à effet de champ, pour laquelle $I_{ds}$ est le courant drain-source et $V_{gs}$ est la tension grille-source

Lorsque le transistor est polarisé sur la grille à $V_{gs} = V_{gs1}$, le courant drain $I_{ds}$ est de l'ordre de quelques microampères, et sa caractéristique non-linéaire permet d'effectuer le redressement du courant de drain généré par une tension microondes sur la grille. Le transistor étant polarisé sur le drain à $V_{dso} \simeq 3$ volts, on obtient de fortes sensibilités de détection, qui sont supérieures à celles obtenues avec des diodes Schottky. Dans ces conditions, le transistor est utilisé en détecteur de niveau, ou démodulateur : il détecte le signal d'interrogation émis par le lecteur.

Lorsque le transistor est polarisé sur la grille à $V_{gs} = V_{gs2}$, le courant $I_{ds}$ est de l'ordre de quelques milliampères. Le transistor est utilisé en oscillateur, en insérant une contre-réaction dans le circuit à la fréquence choisie. La modulation d'amplitude se fait soit par la polarisation de drain, soit par la polarisation de grille. Le transistor est en oscillation, dans un état qu'on appellera 1 Si

$$V_{gs} = V_{gs2}$$

et

$$V_{ds} = V_{ds0}$$

avec $V_{ds0}$ = tension de polarisation de milieu de caractéristique statique.

Le transistor est stable, dans un état qu'on appelera 0 si

$$V_{gs} = V_{gs2}$$

et

$$V_{ds} = 0$$

ou si

$$V_{gs} = V_{gs3}$$

et

$$V_{ds} = V_{ds0}$$

avec $V_{gs3}$ = tension de polarisation de grille pour laquelle le transistor est stable.

La modulation de phase se fait en commutant également les polarisations, pour faire fonctionner le transistor en oscillateur, mais en modulant, de plus, la longueur de ligne entre l'antenne et la grille du transistor, au moyen d'un modulateur de phase, qui est en soi connu.

On voit donc que l'introduction d'un transistor fonctionnant tantôt en démodulateur tantôt en oscillateur permet de réaliser un badge très sensible à la détection- et consommant peu - et en outre capable de communiquer avec d'autres badges, puisqu'il émet lui même ses signaux modulés.

La figure 3 donne le schéma de base du circuit démodulateur-oscillateur selon l'invention.

Le transistor 11, monté en source commune, a sa grille réunie par un réseau d'adaptation 12 à l'entrée 13 du circuit -qui est pratiquement l'unique antenne 9 d'émission- réception-. Un filtre 14 est placé sur l'entrée en 15 de la tension de polarisation de grille $V_{gs}$. Le drain du transistor est chargé par une charge hyperfréquence 16 en parallèle avec un filtre passe-bas 17, qui fournit une sortie 18 en démodulation ou en modulation, selon l'utilisation faite pour le transistor 11. Un filtre 19 est placé sur l'entrée en 20 de la tension de polarisation du drain $V_{ds}$.

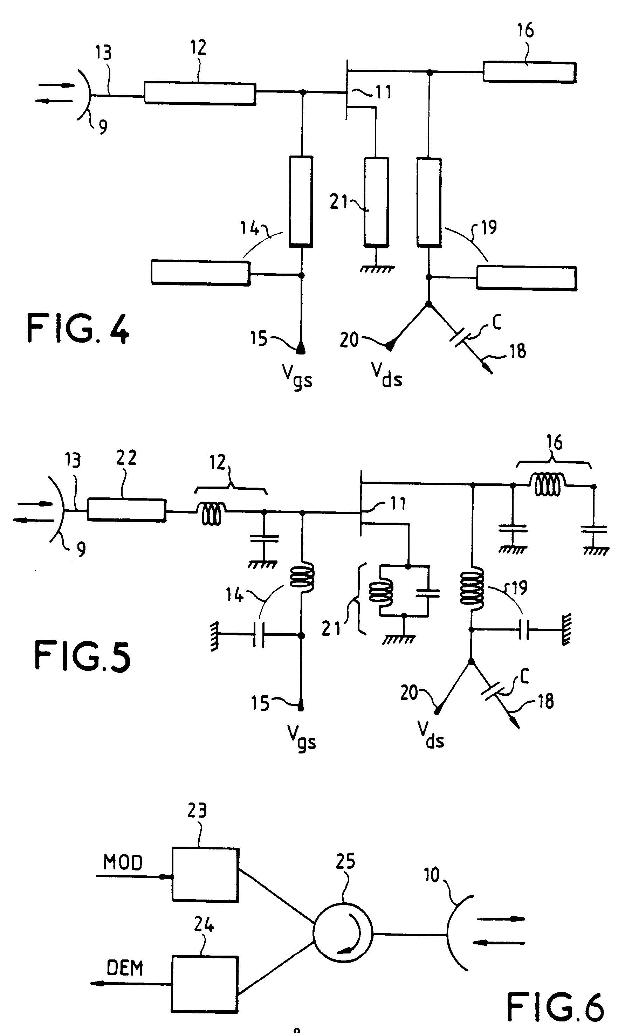

Ce schéma, très général, peut être réalisé selon différentes technologies. La figure 4 donne le schéma de la partie hyperfréquence 3 de la figure 1, dans le cas d'une réalisation hybride avec un transistor discret et des lignes microrubans.

Par comparaison avec la figure précédente, les lignes microrubans 12 et 16 sont les charges d'adaptation d'impédance de couplage entre le transistor 11 et l'antenne, à l'entrée 13, dans les deux types de fonctionnement, démodulation et modulation. Sur la source, la microbande 21 est la contre-réaction du transistor 11, et fournit les conditions d'oscillation. Les deux lignes 14, sur la grille, et les deux lignes 19, sur le drain, sont toutes de longueur "quart d'onde" et assurent le découplage des tensions de polarisations. L'entrée 15 reçoit la polarisation de grille $V_{gs}$, mais constitue également le moyen de commutation démodulateur/modulateur. Pour passer de l'un à l'autre, c'est à dire pour répondre à une interrogation du lecteur 2, la partie traitement de signal 4 du badge envoie la polarisation $V_{gs1}$ ou $V_{gs2}$ ou $V_{gs3}$ correspondante. L'entrée 20 reçoit la polarisation de drain $V_{ds}$ adéquate pour que le transistor 11 soit démodulateur ou modulateur : dans ce dernier cas, les signaux modulation provenant de la partie traitement de l'information 4 sont injectés par cette entrée 20. La sortie 18 de signaux démodulés est reliée au circuit de traitement 4.

La figure 5 donne le schéma équivalent à celui de la figure précédente, dans le cas d'une réalisation intégrée en un circuit spécifique : la puce de circuit intégré doit être rapportée sur un substrat semi-isolant qui comporte une ligne microbande 22 d'adpatation à l'antenne sur l'entrée 13.

Les selfs et capacités intégrées sont beaucoup moins encombrantes, sur la puce d'un circuit intégré, que les lignes microbandes d'une réalisation hybride. L'homme de l'art établiera sans difficulté la concordance entre les réalisations des figures 4 et 5.

Sur ces deux figures C est une capacité de découplage qui permet de supprimer la composante continue sur la sortie de démodulation 18.

La partie hyperfréquence 6 du lecteur 2, représentée en figure 6, est plus simple à réaliser, car elle n'est pas soumise aux mêmes impératifs d'économie que le badge 1. Elle comprend :

- un oscillateur local 23, dont la puissance de sortie est modulable, pour interroger un badge,
- un détecteur direct 24, qui démodule le signal émis par le badge. Cette solution est bien plus simple que celle de l'art connu, selon laquelle un signal non modulé, émis par le lecteur, est réémis après modulation par le badge.
- un circulateur 25 qui oriente l'une ou l'autre voie d'émission-réception vers l'antenne 10.

Ce schéma dans lequel les fonctions sont séparées a d'excellentes performances. Cependant les schémas des figures 4 et 5 peuvent également être utilisés pour réaliser le lecteur: Il est alors préférable d'y associer une antenne ayant un gain assez élevé, selon les applications : 15 à 25 db.

Le système proposé par l'invention permet la communication entre badges, puisque chacun d'eux comprend un oscillateur et est capable d'émettre des trains d'informations, indépendamment du lecteur. Toutefois, en raison du problème de la portée des badges, liée aux piles "boutons" qui les alimentent, ainsi qu'au gain de l'antenne, ces échanges sont limités dans l'espace à de courtes distances, quelques mètres environ.

La comparaison des résultats obtenus avec ceux obtenus selon l'art connu, cités précédemment et dans les mêmes conditions opératoires, montre l'intérêt de l'invention

| | | |
|---|---|---|
| fréquences GHZ | 2,45 | 9,9 |
| sensibilité min. du badge, dBm | -27 | -39 |
| sensibilité min. du lecteur, dBm | -40 | -52 |

Le gain de sensibilité du lecteur est de 20 db à 2,45 GHz et de 32 dB à 9,9 GHZ, ce qui permet au système de communication de fonctionner facilement en milieu perturbé

## Revendications

1. Système d'échange de données par ondes électromagnétiques entre des stations, qui comprend une station fixe, dite lecteur (2), et au moins une station mobile, dite badge (1), chacune de ces deux stations (1,2) comportant un dispositif modulateur/démodulateur (3,6) relié à une antenne (9,10) d'émission/réception des dites données, ce système étant caractérisé en ce qu'au moins le badge (1) comprend dans son dispositif modulateur/démodulateur (3) un transistor (11) à effet de champ qui, sous une première tension de polarisation de grille ($V_{gs1}$), fonctionne en détecteur du signal électromagnétique modulé émis par le lecteur (2) et sous une seconde tension de polarisation de grille ($V_{gs2}$) fonctionne en oscillateur et émet un signal électromagnétique modulé vers le lecteur (2).

2. Système selon la revendication 1, caractérisé en ce que le transistor (11) est relié à l'antenne (9) par sa grille, à travers un réseau d'adaptation (12).

3. Système selon la revendication 2, caractérisé en ce que la première tension de polarisation de grille ($V_{gs1}$) correspond à un faible courant drain $I_{ds}$ ($\mu A$), et la deuxième tension de polarisation de grille ($V_{gs2}$) correspond à un fort courant drain $I_{ds}$ (mA).

4. Système selon la revendication 2, caractérisé en ce que le signal électromagnétique émis par le badge (1) vers le lecteur (2) est modulé en amplitude.

5. Système selon la revendication 2, caractérisé en ce que le signal électromagnétique émis par le badge (1) vers le lecteur (2) est modulé en phase.

6. Système selon la revendication 2, caractérisé en ce que chacune des deux dites stations (1,2) comporte en outre un circuit de traitement des signaux (4,7), qui, au moins dans le badge (1), fournit les tensions de polarisations ($V_{gs}$, $V_{ds}$) qui commutent le transistor (11) de la fonction détecteur (interrogation par le lecteur) à la fonction oscillateur (réponse au lecteur).

7. Système selon la revendication 1, caractérisé en ce que les ondes électromagnétiques utilisées entre les deux stations fixe (2) et mobile (1) sont du domaine des microondes, par exemple 1 à 100 GHz.

8. Système selon la revendication 1, caractérisé en ce que le système comprend deux badges, chaque badge étant muni d'un oscillateur émetteur à ondes électromagnétiques, pour que les deux badges peuvent échangent des données entre eux.

9. Système selon l'une quelconque des revendications 1 à 8, caractérisé en ce que le badge est de format "carte de crédit".

**Patentansprüche**

1. Datenaustauschsystem über Mikrowellen zwischen Stationen, mit einer Feststation, auch Lesestation (2) genannt, und mindestens einer beweglichen Station, auch Chipkarte (1) genannt, wobei jede dieser beiden Stationen (1, 2) eine an eine Antenne (9, 10) zum Aussenden und Empfangen der Daten angeschlossene Modulations-Demodulationsvorrichtung (3, 6) enthält, dadurch gekennzeichnet, daß mindestens die bewegliche Station (1) in ihrer Modulations-Demodulationsvorrichtung (3) einen Feldeffekttransistor (11) enthält, der bei einer ersten Gatevorspannung ($V_{gs1}$) als Detektor für das von der Lesestation (2) ausgesendete modulierte elektromagnetische Signal und bei einer zweiten Gatevorspannung ($V_{gs2}$) als Oszillator wirkt und ein elektromagnetisches moduliertes Signal in Richtung zur Lesestation (2) aussendet.

2. System nach Anspruch 1, dadurch gekennzeichnet, daß der Transistor (11) mit seinem Gate an die Antenne (9) über ein Anpassungsnetz (12) angeschlossen ist.

3. System nach Anspruch 2, dadurch gekennzeichnet, daß die erste Gatevorspannung ($V_{gs1}$) einem niedrigen Drainstrom $I_{ds}$ (μA) und die zweite Gatevorspannung ($V_{gs2}$) einem starken Drainstrom $I_{ds}$ (mA) entspricht.

4. System nach Anspruch 2, dadurch gekennzeichnet, daß das von der beweglichen Station (1) in Richtung auf die Lesestation (2) ausgesendete elektromagnetische Signal amplitudenmoduliert ist.

5. System nach Anspruch 2, dadurch gekennzeichnet, daß das von der beweglichen Station (1) zur Lesestation (2) ausgesendete elektromagnetische Signal ein phasenmoduliertes Signal ist.

6. System nach Anspruch 2, dadurch gekennzeichnet, daß jede der beiden Station (1, 2) außerdem eine Signalbearbeitungsschaltung (4, 7) aufweist, die mindestens in der beweglichen Station (1) die Vorspannungen ($V_{gs}$, $V_{ds}$) liefert, die den Transistor (11) vom Detektorbetrieb (Abfrage durch die Lesestation) auf den Oszillatorbetrieb (Antwort an die Lesestation) umschaltet.

7. System nach Anspruch 1, dadurch gekennzeichnet, daß die zwischen der Feststation (2) und der beweglichen Station (1) verwendeten elektromagnetischen Wellen im Mikrowellenbereich liegen, beispielsweise im Bereich zwischen 1 und 100 GHz.

8. System nach Anspruch 1, dadurch gekennzeichnet, daß das System zwei bewegliche Stationen aufweist, die je einen Oszillator zur Aussendung von elektromagnetischen Wellen besitzen, damit die beiden beweglichen Stationen Daten untereinander austauschen können.

9. System nach einem beliebigen der Ansprüche 1 bis 8, dadurch gekennzeichnet, daß die bewegliche Station Kreditkartenformat hat.

6

## Claims

1. System for exchanging data by electromagnetic waves between stations, which comprises a fixed, so-called reader station (2), and at least one mobile, so-called tag station (1), each of these two stations (1, 2) including a modulator/demodulator device (3, 6) connected to an antenna (9, 10) for transmitting/ receiving the said data, this system being characterized in that at least the tag (1) comprises in its modulator/ demodulator device (3) a field-effect transistor (11) which, under a first gate bias voltage ($V_{gs1}$), operates as detector of the modulated electromagnetic signal transmitted by the reader (2) and, under a second gate bias voltage ($V_{gs2}$), operates as oscillator and transmits a modulated electromagnetic signal to the reader (2).

2. System according to Claim 1, characterized in that the transistor (11) is connected to the antenna (9) by its gate, across a matching network (12).

3. System according to Claim 2, characterized in that the first gate bias voltage ($V_{gs1}$) corresponds to a weak drain current $I_{ds}$ ($\mu$A), and the second gate bias voltage ($V_{gs2}$) corresponds to a strong drain current $I_{ds}$ (mA).

4. System according to Claim 2, characterized in that the electromagnetic signal transmitted by the tag (1) to the reader (2) is amplitude modulated.

5. System according to Claim 2, characterized in that the electromagnetic signal transmitted by the tag (1) to the reader (2) is phase modulated.

6. System according to Claim 2, characterized in that each of the two said stations (1, 2) furthermore includes a signal processing circuit (4, 7), which, at least in the tag (1), provides the bias voltages ($V_{gs}$, $V_{ds}$) which switch the transistor (11) from the detector function (interrogation by the reader) to the oscillator function (response to the reader).

7. System according to Claim 1, characterized in that the electromagnetic waves used between the two stations, fixed (2) and mobile (1), are in the microwave region, for example 1 to 100 GHz.

8. System according to Claim 1, characterized in that the system comprises two tags, each tag being furnished with an electromagnetic wave transmitter oscillator so that the two tags can exchange data with each other.

9. System according to any one of Claims 1 to 8, characterized in that the tag is of "credit card" proportions.

# FIG.1

# FIG.2

# FIG.3

8

FIG. 4

FIG.5

FIG.6